Europäisches Patentamt

European Patent Office

Office européen des brevets

(19)

(11) Veröffentlichungsnummer: **0 166 150**
**B1**

(12) **EUROPÄISCHE PATENTSCHRIFT**

(45) Veröffentlichungstag der Patentschrift: **09.01.91**

(21) Anmeldenummer: **85105824.8**

(22) Anmeldetag: **11.05.85**

(51) Int. Cl.⁵: **A 01 B 3/42, A 01 B 15/00**

(54) Pendelstützrad.

(30) Priorität: **25.05.84 DE 3419508**
**10.11.84 EP 84113610**

(43) Veröffentlichungstag der Anmeldung:
**02.01.86 Patentblatt 86/01**

(45) Bekanntmachung des Hinweises auf die
Patenterteilung:
**09.01.91 Patentblatt 91/02**

(84) Benannte Vertragsstaaten:
**FR GB**

(56) Entgegenhaltungen:
**EP-A-0 181 947**
**DE-C- 955 007**
**FR-A-2 333 423**

(73) Patentinhaber: **Rabewerk GmbH + Co.**
**D-4515 Bad Essen (DE)**

(72) Erfinder: **Groth, Hermann, Dipl.-Ing.**
**Im Weidengrund 7**
**D-4515 Bad Essen 1 (DE)**
Erfinder: **Buhl, Manfred, Dipl.-Ing.**
**Am Krähenhügel 10**
**D-4500 Osnabrück (DE)**

(74) Vertreter: **Missling, Arne, Dipl.-Ing.**
**Patentanwalt Bismarckstrasse 43**
**D-6300 Giessen (DE)**

**Beschreibung**

Die Erfindung betrifft ein Pendelstützrad für Drehpflüge gemäß dem Oberbegriff der Ansprüche 1 und 4.

Aus der DE-U-8 023 453 ist ein Pendelstützrad für Drehpflüge bekannt, an dessen Stützradträger ein Sporn oder Dorn angebracht ist, der sich in eng begrenztem Bereich verschwenken läßt und bei Aufsetzen des Pflugrahmens in den Boden eindringt. Bei der Arbeit soll dieser Sporn etwas nach hinten einschwenken können, damit an seiner Spitze keine Bewuchsreste wie Kraut und Stroh, Dünger usw. hängenbleiben. Der gegebenenfalls abgefederte Sporn hat eine Gelenkachse, die zur Achse des Rades parallel verläuft. Die durch Anschläge begrenzte Beweglichkeit des Sporns, der an seinem unteren Ende schaufelartig verbreitet sein kann, erstreckt sich stets in Umfangsrichtung des Stützrades. Ein Anlegen des Sporns an das Stützrad kann daher nicht stattfinden.

In der DE-C-955 007 ist ein Pendelstützrad beschrieben, das um eine waagrechte Achse bis hin zu einem Anschlag schwenkbar ist, an dem der Stützradträger bei der Bodenbearbeitung anliegt. Ein Bügel, der das Rad umgreift, ist als Schmutzabstreifer starr am Radträger angebracht und wirkt wie ein Sporn, der ein Wegrollen des Rades nach vorn verhindern und sich in den Boden eindrücken soll, um das Rad beim Anfahren sicher an den Anschlag zu bringen. Das ist jedoch durchaus nicht unter allen Umständen gewährleistet.

Nach dem Stand der Technik kann das Pendelstützrad noch abrollen, wenn dem Sporn etwa bei lockerem Boden nicht genug Widerstand entgegengesetzt wird. Demgegenüber wird die Aufgabe der Erfindung darin gesehen, ein Pendelstützrad der eingangs genannten Art mit einfachen Mitteln so auszubilden, daß es auch auf lockerem Boden beim Wenden des Pflugrahmens zuverlässig in die Arbeitsstellung gelangt und daß es darüberhinaus fortlaufend eine Reinigung des Stützrades bewirkt.

Diese Aufgabe wird durch die kennzeichnenden Merkmale von Anspruch 1 gelöst. Ausgestaltungen sind Gegenstand der Ansprüche 2 und 3. Eine weitere Lösungsform ist im unabhängigen Anspruch 4 angegeben.

Laut Anspruch 1 besteht die in den Boden eindringende Einrichtung aus einem die Lauffläche des Stützrades zumindest teilweise übergreifenden Bügel, dessen Außenteil zur Lauffläche einen geringen Abstand hat, wobei der federnd aufgehängte oder aus einem federnden Material bestehende Bügel in einem geringen Abstand seitlich am Rad liegend angeordnet ist. Der neuartige Bügel wird mithin einen federnden Abstreifer, mit dem das Stützrad beim Aufsetzen auf den Erdboden blockierbar ist. Der Bügel wird dabei auf das Rad zu geschwenkt und legt sich am Reifen an, wodurch das Rad festgehalten wird. Indem also die Drehbarkeit des Rades mit dem Federbügel beim Aufsetzen auf den Boden unterbunden wird, gelangt das Stützrad durch den Widerstand am Boden nach hinten bis zum Anschlag, wodurch ein sicheres Anfahren gewährleistet ist. Mit überaus einfachen Mitteln wird daher die Funktionssicherheit des Pendelstützrades nach der Erfindung beträchtlich verbessert, so daß die Bodenbeschaffenheit untergeordnete Bedeutung bekommt.

Die herkömmlichen Einrichtungen leisten dies nicht, da entweder nur ein beweglicher Sporn oder nur ein starrer Bügel vorgesehen war. So ist der herkömmliche Bügel gemäß DE-C-955 007 am Stützradträger starr angebracht; er soll und kann nicht federn. Der Sporn gemäß DE-U-8 023 453 ist hingegen weder ein Bügel noch als Radabstreifer ausgebildet. Darüberhinaus ist er lediglich um eine Achse schwenkbar, die zur Radachse parallel verläuft, wogegen eine Schwenkbarkeit um eine dazu senkrecht stehende Achse weder bei diesem Sporn noch bei dem Bügel gemäß der vorgenannten DE-C-955 007 gegeben ist. Im Gegensatz dazu ist der Bügel nach der Erfindung zusätzlich um ein Gelenk beweglich, dessen Achse senkrecht zur Radachse verläuft.

Der neuartige Bügel kann gemäß Anspruch 2 in Seitenansicht S-förmig ausgebildet und/oder laut Anspruch 3 längs der Felgenkontur geführt sein. Mithin kann der Bügel seitlich am Stützrad herumgezogen sein und sogar in die Vertiefung der Felge eingreifen, so daß er nicht nur die Lauffläche des Stützrades, sondern auch die Seitenfläche sowie die Felge ständig reinigt.

In einer wichtigen Ausführungsform der Erfindung gemäß Anspruch 4 ist die Radachse des Stützrades an dem als Abstreifer ausgebildeten Bügel so gelagert, daß die Lagerstelle der Radachse einen größeren Abstand zur Lagerachse des Stützradträgers aufweist als die Lagerstelle des Bügels am Stützradträger und daß der Bügel mit wenigstens einer Feder zusammenwirkt, durch die der Bügel in eine Stellung gedrückt wird, die etwa in Längsrichtung des Stützradträgers liegt. Bei nach hinten in Arbeitsstellung verschwenktem Stützradträger wird der Bügel infolgedessen entgegen dem Uhrzeigersinn von der Aufstandsfläche des Rades am Boden weg verschwenkt. Man erhält hierdurch größere Bodenfreiheit, so daß ein Verstopfen zwischen Rad und Bügel weiter vermindert bzw. ausgeschlossen ist.

Ausführungsbeispiele der Erfindung werden im folgenden anhand der Zeichnung näher beschrieben. Darin zeigen:

Fig. 1 eine Seitenansicht eines erfindungsgemäß ausgebildeten, an einem Drehpflug montierten Pendelstützrades,

Fig. 2 einen Schnitt durch eine Ausführungsform eines Pendelstützrades mit einem Federbügel,

Fig. 3 eine weitere Ausführungsform eines Pendelstützrades mit einem starren, federnd gelagerten Bügel,

Fig. 4 ein weiteres Ausführungsbeispiel gemäß der Erfindung mit einem Federbügel und

Fig. 5 ein weiteres Ausführungsbeispiel gemäß der Erfindung, bei dem der Federbügel verschwenkbar am Stützradträger befestigt ist.

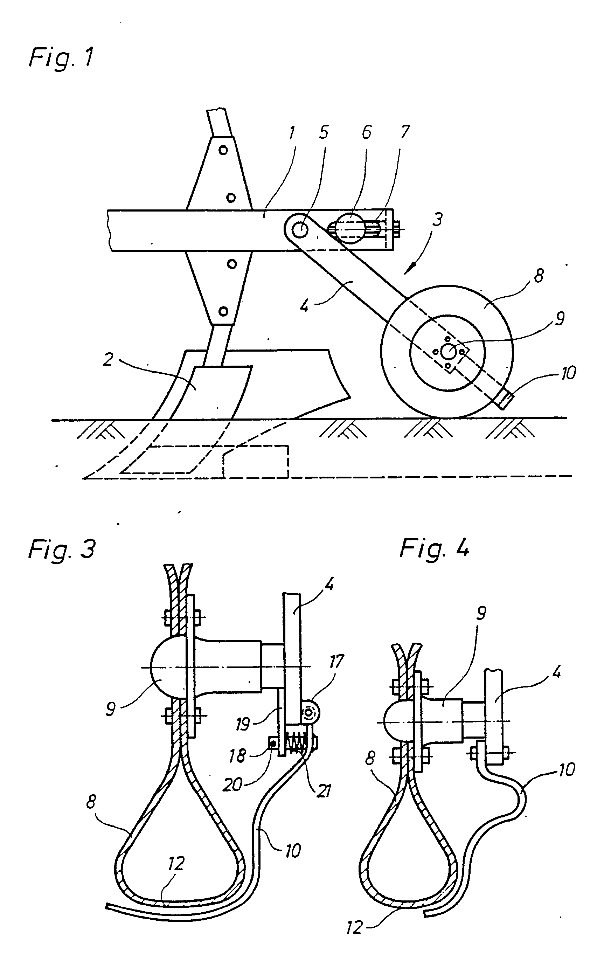

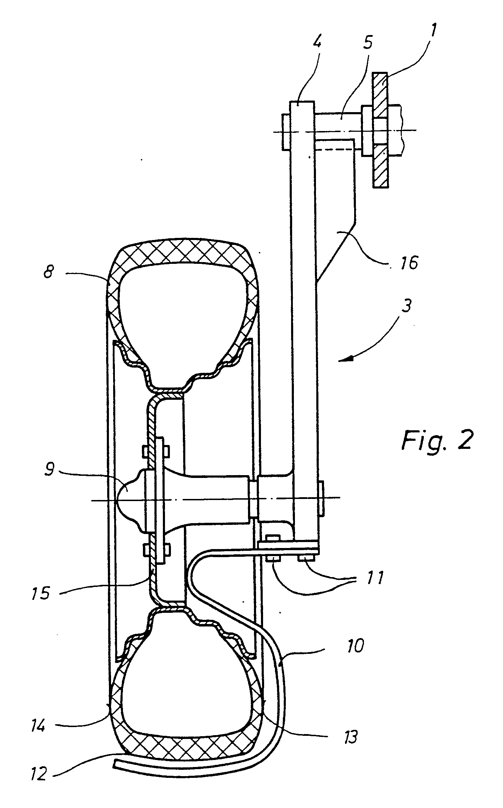

In Fig. 1 ist das Ende eines Pflugrahmens 1 dargestellt, an dem zwei Pflugkörper 2 angebracht sind, von denen lediglich der eine Pflugkörper dargestellt ist. Am hinteren Ende ist das Pendelstützrad 3 mit seinem Stützradträger 4 über eine in der Arbeitsstellung des Pfluges waagerecht liegende Achse 5 angelenkt. Im Rahmen 1 ist ein Anschlag 6 in einem Langloch 7 verschiebbar angeordnet, der als Anschlag für den Stützradträger 4 dient und gleichzeitig die Arbeitstiefe des Pfluges festlegt. Zu diesem Zweck ist der Anschlag 6 in dem Langloch 7 verschiebbar angeordnet.

Das Pendelstützrad 3 besteht aus dem Stützradträger 4 und dem Rad 8, das mit seiner Achse 9 am Stützradträger 4 befestigt ist.

Beim Wenden der Pflugkörper 2 wird der Rahmen 1 des Pfluges angehoben, so daß das Pendelstützrad 3 um die Achse 5 in der Zeichnung nach links schwenkt. Beim Wenden der Pflugkörper schwenkt dann das Pendelstützrad 3 synchron mit der Drehung des Pflugrahmens auf die andere Seite über und legt sich dann in der Arbeitsstellung wieder auf der anderen Seite am Anschlag 6 an. Wenn der Pflugrahmen 1 noch angehoben ist, hängt somit das Pendelstützrad 3 lotrecht nach unten. Beim Absenken des Pflugrahmens muß dann sichergestellt werden, daß das Pendelstützrad 3 in der Zeichnung nach rechts ausweicht, so daß es am Anschlag 6 zur Anlage kommt. Würde das Pendelstützrad 3 in der entgegengesetzten Stellung ausgelenkt werden, so ist die Tiefenhaltung nicht mehr gewährleistet.

In der Fig. 2 ist ein Ausführungsbeispiel gemäß der Erfindung dargestellt, bei dem das Pendelstützrad 3 mit einem Bügel 10 versehen ist, der am Stützradträger 4 mittels Schrauben 11 befestigt ist. Der Bügel 10 hat eine im wesentlichen S-förmige Form und erstreckt sich bis unter die Lauffläche 12 des Rades 8. Der Bügel 10 ist in einem geringen Abstand zur Lauffläche 12 des Rades 8 angeordnet, so daß der Bügel beim Aufsetzen des Stützrades auf den Boden gegen die Lauffläche 12 des Rades gepreßt wird. Des weiteren ist auch der Bügel 10 seitlich so dicht neben dem Rad angeordnet, daß auch eine Seitenfläche 13 des Rades 8 gereinigt wird. Es ist auch denkbar, den Bügel 10 an der anderen Seitenfläche 14 des Rades 8 hochzuziehen, so daß auch diese gleichzeitig gereinigt wird. Im Bereich der Felge 15 des Rades 8 ist der Bügel 10 derart verformt, daß er in das Innere der Felge 15 hineinreicht, so daß auch gleichzeitig noch die Felge mitgereinigt wird.

Der Bügel 10 selbst ist federnd ausgebildet und an der Stelle angeordnet, die am tiefsten liegt, wenn das Rad bei angehobenem Pflugrahmen 1 lotrecht nach unten hängt. Der Bügel 10 hat somit eine zweifache Funktion, und zwar zum einen die Funktion sicherzustellen, daß das Pendelstützrad nach dem Wenden der Pflugkörper und durch Vorwärtsfahrt in seine Arbeitsstellung gelangt, d. h. am Anschlag 6 mit seiner Anschlagplatte 16 anliegt, und zum anderen die Aufgabe, das Rad 8 ständig zu reinigen. Hierzu nimmt dann der Bügel 10 die in Fig. 1 gezeigte Lage ein, wobei dieser dann aufgrund der Federwirkung in einem geringen Abstand zum Rad angeordnet ist.

Bei dem Ausführungsbeispiel nach Fig. 3 sind gleiche Teile mit gleichen Bezugszeichen versehen. Der Unterschied zum Ausführungsbeispiel nach Fig. 2 besteht darin, daß das Rad hier ein Eisenrad ist und nicht ein gummibereiftes Rad wie bei dem Ausführungsbeispiel nach Fig. 2. Ein weiterer Unterschied besteht darin, daß der Bügel 10 nicht in sich federnd ausgebildet ist sondern federnd am Stützradträger 4 angeordnet ist. Bei dem Ausführungsbeispiel nach Fig. 3 ist der Federbügel 10 in einem Gelenk 17 am Stützradträger 4 angelenkt. Am Bügel 10 ist ein Bolzen 18 befestigt, der in eine Bohrung einer Lasche 19 greift und durch einen Stift 20 am Herausrutschen gehindert ist. Zwischen der Lasche 19 und dem Bügel 10 ist eine Feder 21 angeordnet, die den Bügel 10 in unbelastetem in einem ganz bestimmten Abstand von der Lauffläche 12 des Rades 8 fixiert. Andererseits kann der Bügel 10 bei Belastung gegen die Lauffläche 12 des Rades gepreßt werden.

Bei dem Ausführungsbeispiel nach Fig. 4 sind gleiche Teile mit gleichen Bezugszeichen versehen. Der wesentliche Unterschied zum Ausführungsbeispiel nach Fig. 3 besteht darin, daß der Bügel 10 unmittelbar am Stützradträger 4 festgeschraubt ist und aus einem Federmaterial besteht, so daß sich dieser nach Belastung wieder in seine Ausgangsstellung zurückbewegt. Der Bügel 10 ist hier zur Verbesserung des Anschmiegens an das Profil S-förmig nach außen verkröpft. Es ist ebenfalls denkbar, den Bügel in der anderen Richtung zu kröpfen, so daß auch noch die Innenseite des Rades 8 gereinigt wird, wie dies anhand des Ausführungsbeispiels 2 erläutert worden ist.

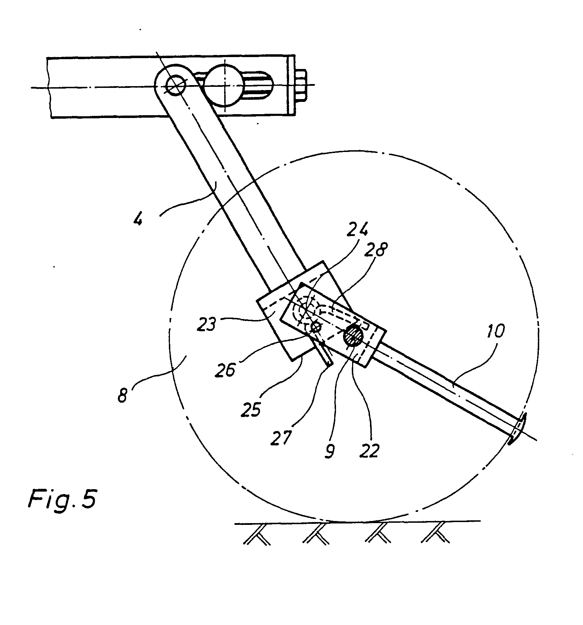

Bei dem in Fig. 5 gezeigten Ausführungsbeispiel sind gleiche Teile mit gleichen Bezugszeichen versehen. Am Pflugrahmen 1 ist der Stützradträger 4 schwenkbar befestigt und liegt an einem Anschlag 6 an, der, wie Fig. 1 zeigt, verstellbar ausgebildet ist. Am unteren Ende des Stützradträgers 4 ist ein Bügel 10 befestigt, der um eine Achse 24, die von einem gabelförmigen Endstück 23 des Stützradträgers 4 getragen ist, schwenkbar ist. Der Schwenkbereich des Bügels 10 wird durch zwei Anschläge 25 begrenzt. Der Bügel 10 weist ein gabelförmiges Teil 22 auf, das das Endstück 23 übergreift und die Radachse 9 des Stützrades 8 aufnimmt. Die Radachse 9 ist unterhalb der Achse 24 angeordnet. Das Endstück 23 weist einen zwischen der Achse 24 und der Radachse 9 liegenden Stift 26 auf, der zwischen die Schenkel 27, 18 einer Schenkelfeder greift, die in der Gabel des Endstückes 23 angeordnet ist und in mehreren Windungen die Achse 24 umgibt. Die Schenkel der Schenkelfeder liegen außerdem an der durch das gabelförmige Teil 22 hindurchgreifenden Radachse 9 an. Die Stärke der Schenkelfeder ist so gewählt, daß der Bügel 10 durch diese Schenkelfeder in seiner Mittelstellung gehalten wird, in der dieser in Achsrichtung des Stützradträgers liegt. Beim Wechsel der Pflügrichtung dringt zunächst der Bügel in das Erdreich ein. Die Kräfte, die das Stützrad gegenüber dem Pflugrahmen verzögern, werden von der Schenkelfeder aufgenommen, ohne daß eine Verschwenkung des Bügels 10 eintritt. Erst wenn der Stützradträger 4 an den Anschlägen 6 zur Anlage kommt und somit das Gewicht des Pfluges auf dem Stützrad 8 lastet, wird die Vorspannung der Schenkelfeder überschritten, und zwar aufgrund des Hebelarmes, der durch den Abstand der Achse 24 und der Radachse 9 erhalten wird. Es erfolgt dann ein Ausschwenken des Bügels 10 nach hinten, wie dies in Fig. 5 gezeigt ist. Der Schwenkbereich des Bügels 10 wird durch die Anschläge 25 begrenzt, die auch einstellbar ausgebildet sein können. Die Verschwenkung des Bügels 10 wird so gewählt, daß Bewuchsreste oder aber auch Stroh am Bügel vorbeigleiten können, ohne daß diese hängen bleiben und zu einer Verstopfung führen können.

## Patentansprüche

1. Pendelstützrad (3) für Drehpflüge, mit einem das Stützrad (8) haltenden Stützradträger (4), welcher am Pflugrahmen (1) eines Drehpfluges um eine in dessen Arbeitsstellung waagrecht liegende Achse (5) schwenkbar angeordnet und an welchem eine Einrichtung (10) federnd angebracht ist, die bei lotrecht herabhängendem Stützradträger in den Boden eingreift, dadurch gekennzeichnet, daß die Einrichtung aus einem die Lauffläche (12) des Stützrades (8) zumindest teilweise übergreifenden Bügel (10) besteht, dessen Außenteil zur Lauffläche (12) einen geringen Abstand hat, und daß der als Abstreifer ausgebildete, federnd aufgehängte oder aus einem federnden Material bestehende Bügel (10) in einem geringen Abstand seitlich am Rad (8) liegend angeordnet ist.

2. Pendelstützrad nach Anspruch 1, dadurch gekennzeichnet, daß der Bügel (10) in Seitenansicht S-förmig ausgebildet ist.

3. Pendelstützrad nach Anspruch 1 oder 2, dadurch gekennzeichnet, daß der Bügel (10) längs der Kontur der Felge (15) geführt ist.

4. Pendelstützrad (3) für Drehpflüge, mit einem das Stützrad (8) haltenden Stützradträger (4), welcher am Pflugrahmen (1) eines Drehpfluges um eine in dessen Arbeitsstellung waagrecht liegende Achse (5) schwenkbar angeordnet und an welchem ein Bügel (10) federnd angebracht ist, welcher bei lotrecht herabhängendem Stützradträger in den Boden eingreift, welcher die Lauffläche des Stützrades (8) ganz oder teilweise übergreift und welcher in einem geringen Abstand zur Lauffläche angeordnet ist, welcher Bügel (10) ferner am Stützradträger (4) in durch Anschläge (25) begrenztem Bereich um eine Achse (24) drehbar gelagert ist, wobei zu seiner Verschwenkung gegenüber dem Stützradträger (4) abhängig von der Stellung zum Pflugrahmen (1) die Relativbewegung zwischen dem Stützradträger (4) und dem Stützrad (8) ausgenutzt wird, dadurch gekennzeichnet, daß die Radachse (9) des Stützrades (8) an dem als Abstreifer ausgebildeten Bügel (10) gelagert ist, daß die Lagerstelle der Radachse (9) einen größeren Abstand zur Lagerachse (5) des Stützradträgers (4) aufweist als die Lagerstelle (24) des Bügels (10) am Stützradträger und daß der Bügel (10) mit wenigstens einer Feder (27, 28) zusammenwirkt, durch die der Bügel (10) in eine Stellung gedrückt wird, die etwa in Längsrichtung des Stützradträgers (4) liegt.

## Revendications

1. Système de roue d'appui pivotante (3) pour charrue brabant, comprenant un porte-roue (4) maintenant la roue d'appui (8), et qui est disposé avec liberté de pivotement autour d'un axe (5) placé horizontalement sur le cadre (1) d'une charrue brabant en position de travail de celle-ci, et sur lequel est aménagé un dispositif (10) à action élastique qui pénètre dans le sol lorsque le porte-roue pend verticalement, caractérisé en ce que le dispositif est constitué par une pièce recourbée (10) recouvrant au moins en partie la surface de roulement (12) de la roue d'appui (8), et dont la partie extérieure se trouve à une faible distance de la surface de roulement (12), et en ce que la pièce recourbée (10), qui fait fonction de racloir, est pourvue d'une suspension élastique ou est constituée dans une matière élastique et est disposée à une faible distance sur le côté de la roue.

2. Système de roue d'appui pivotante selon la revendication 1, caractérisé en ce que la pièce recourbée (10) est, vue de côté, constituée en forme de S.

3. Système de roue d'appui pivotante selon la revendication 1 ou 2, caractérisé en ce que la pièce recourbée (10) est guidée le long du contour de la jante (15).

4. Système de roue d'appui pivotante (3) pour charrue brabant, comportant un porte-roue (4) maintenant la roue d'appui (8), monté, avec liberté de pivotement sur un axe (5) placé horizontalement, sur le cadre (1) d'une charrue brabant, en position de travail de celle-ci, et sur lequel est fixée élastiquement une pièce recourbée (10) qui s'enfonce dans le sol lorsque le porte-roue pend verticalement, qui recouvre tout ou partie de la bande de roulement de la roue d'appui (8) et qui est disposée à une faible distance de cette bande de roulement, laquelle pièce recourbée (10) est, en outre, montée sur le porte-roue (4) libre en rotation autour d'un axe (24) dans un secteur limité par des butées (25), le déplacement relatif entre le porte-roue (4), et la roue d'appui (8) étant utilisé pour son pivotement par rapport au porte-roue (4), en fonction de la position dudit porte-roue par rapport au cadre de la charrue, caractérisé en ce que l'axe (9) de la roue d'appui (8) est monté sur la pièce recourbée (10) constituant un racloir, en ce que l'axe (9) de la roue est à une plus grande distance de l'axe de pivotement (5) du porte-roue (4) que l'axe de pivotement (24) de la pièce recourbée (10) sur le porte-roue, et en ce que la pièce recourbée (10) coopère avec au moins un ressort (27, 28), qui repousse ladite pièce (10) vers une position située approximativement dans la direction longitudinale du porte-roue.

## Claims

1. Pivotable gauge wheel for rotary ploughs, with a gauge wheel carrier (4) which holds the gauge wheel (8) and which is arranged on the plough frame (1) of a rotary plough to be swivellable about a shaft (5) disposed horizontally in the working position thereof and on which is resiliently arranged a device (10) which penetrates into the ground when the gauge wheel carrier is hanging down vertically, characterised in that the device consists of a stirrup (10) extending, at least partially, over the tread surface (12) of the gauge wheel (8) and the external part of which has a small spacing relatively to the tread surface (12), and that the stirrup (10), which is formed as a stripper, is resiliently suspended or consists of a resilient material, is arranged horizontally at a small distance laterally on the wheel (8).

2. Pivotable gauge wheel according to claim 1, characterised in that the stirrup (10) is of S-shaped construction in side elevation.

3. Pivotable gauge wheel according to claim 1 or 2, characterised in that the stirrup (10) is guided longitudinally of the contour of the rim (15).

4. Pivotable gauge wheel (3) for rotary ploughs, with a gauge wheel carrier (4) which holds the wheel (8) and which is pivotally arranged on the plough frame (1) of a rotary plough, in order to be pivotable about a shaft (5) lying horizontally in its operating position and on which is resiliently mounted a stirrup (10) which bites into the ground when the gauge wheel carrier is hanging down perpendicularly, which stirrup engages wholly or partially over the tread surface of the gauge wheel (8) and which is arranged at a small distance from the tread surface, which stirrup (10) is also mounted to be rotatable about a shaft (24) on the gauge wheel carrier (4) in a region limited by stops (25), and as regards its swinging movement with respect to the gauge wheel carrier (4) and dependent on the position of the plough frame (1), the relative movement between the gauge wheel carrier (4) and the gauge wheel (8) is used, characterised in that the wheel axle (9) of the gauge wheel (8) is mounted on the stirrup (10) formed as a stripper, that the mounting position of the wheel axle (9) has a larger spacing from the mounting shaft (5) of the gauge wheel carrier (4) than the mounting position (24) of the stirrup (10) on the gauge wheel carrier and that the stirrup (10) coacts with at least one spring (27, 28), by which the stirrup (10) is forced into a position which is disposed approximately longitudinally of the gauge wheel carrier (4).

EP 0 166 150 B1

Fig. 1

Fig. 3

Fig. 4

1

Fig. 2

Fig.5